# EUROPEAN PATENT APPLICATION

(11) **EP 2 092 972 A1**
(43) Date of publication of application: **26.08.2009**
(21) Application number: 08003396.2
(22) Date of filing: 25.02.2008
(51) Int. Cl.: B01D 45/02, F04D 29/70

(54) **Compressor unit**

(71) Applicant: SIEMENS AKTIENGESELLSCHAFT, 80333 München (DE)
(72) Inventor: Buse, Marcel, 7531 Enschede (NL); Korenblik, Gerard, 7478 BL Diepenheim (NL)

(57) **Abstract**

The invention relates to a Compressor unit (1) comprising a compressor (2), with at least one compression stage (5), which comprises at least one impeller (40) of a rotor (11), with an inlet (41) and an outlet (42),
a suction line (7) being connected with the inlet (41),
a discharge line (9) being connected with the outlet (42),
a rotor (11) rotating around a rotation axis (10). Ordinary compressor units can be destroyed by large amounts of liquids entering the suction line. In particular for sub sea application the invention provides a solution, wherein the inlet (41) comprises
an annular chamber (13), arranged around the rotation axis (10) with at least one opening to an entrance to the impeller (40), in which a separation unit (15) to separate liquid (33) or particles from an entering fluid flow is and a distribution unit (16) to distribute fluid around the circumference of the rotation axis (10) before entering a first stage (5) of the compressor (2) are provided. It is therefore one object of the invention to make the compressor unit save against high amounts of non-gaseous fluids in the suction line on the way to enter the compressor and to avoid any damage, while the compactness of the machine is to be maintained.

## Description

The invention relates to a compressor unit comprising a compressor, with at least one compression stage, which comprises at least one impeller of a rotor, with an inlet and an outlet, further comprising a suction line being connected with the inlet, further comprising a discharge line being connected with the outlet, further comprising a rotor, rotating around a rotation axis and further comprising a casing enclosing the compressor.

Recent developments in particular in the field of natural gas exploitation are aiming to compress natural gas below sea-level nearby the well-head. Theses developments are economically very interesting because offshore platforms involve extremely high costs for operating personal. Underwater compression of natural gas might in future make mend offshore platforms superfluous.

However, the new development goes along with enormous technical problems connected with difficult operating conditions and bad accessibility of the compression units. Major challenges are low temperatures near the freezing point, high pressure of the surrounding chemically aggressive seawater, non-purified and chemically aggressive fluid to compress, wherein the natural gas varies in the suction-pressure and carries next to foreign particles also non-gaseous fluids respectively liquids in significant amounts. Over the life-time of the well, the pressure of the natural gas to be exploited decreases significantly. According to environmental protection no media exchange between the compressor unit and the surrounding is admitted.

The focus of the invention is laid on the problem of the occurrence of high amounts of non-gaseous fluid entering the compressor. It is already known to install between the well-head and the compressor unit a separator, to get rid of non-gas fluid before entering the compressor. To avoid excessive pressure loss in the separation unit and to keep the installation effort in reasonable limits, the separator cannot be built to cope with every possible amount of non-gas fluid, which might occur. On the other hand the compressor unit might be destroyed by only one incident, during which the separator was not able to cope with the amount of non-gaseous fluid.

From EP 1 839 722 A1 a separation device for separating particles and liquids from a gas flow is known as well as from DE 38 59 45. Both arrangements are very space consuming and therefore difficult to integrate into a housing of a compressor unit. Next to the disadvantage of space consumption one problem of the known types of separation units is the insufficiency for separating very large amounts of liquid and the problem that ordinary arrangements with compressors might not be able to cope with these difficult operating conditions.

It is therefore one object of the invention to make the compressor unit save against high amounts of non-gaseous fluids in the suction line on the way to enter the compressor and to avoid any damage, while the compactness of the machine is to be maintained.

The object is achieved by a compressor unit of the incipiently mentioned type, wherein the inlet comprises an annular chamber, arranged around the rotation axis (10) with at least one opening to an entrance to the impeller, in which a separation unit to separate liquid or particles from an entering fluid flow is and a distribution unit to distribute fluid around the circumference of the rotation axis before entering a first stage of the compressor are provided.

The combination of the inlet chamber, which distributes the flow equally around the circumference and a separation unit, which separates preferably liquids from the fluid to compress, is not space consuming and can be advantageously integrated into the compressor unit without extreme space requirements. The even more important advantage is the equal distribution of liquids entering through the suction line over the circumference of the chamber by the fluid flow in the case that the slack of liquids is to big to be drained fast enough and enters the compressor stage. In this case the liquid does not enter the compressor stage only on one side but evenly distributed over the circumference and therefore the mechanical load on the compressor is not as destructive as in ordinary compressor units.

One advantage of the compressor unit according to the invention is the capability to cope also with very large amounts of for example liquids mixed with the gas to be compressed without destructing the compressor. The combination of distribution unit and separation unit into one chamber arranged circumferentially around the inlet of the first stage in an annular chamber enables also an even distribution of high amounts of liquid over the circumference so that if the drain line can not drain the hole liquid amount and the separation is not able to get rid of the liquid, the liquid does not enter the first stage for one side but is evenly distributed and the first stage is evenly loaded over the all circumference, which leads to a higher tolerance of the compressor unit against big slucks of liquid.

In another embodiment the combination of separation unit and distribution unit comprises a first annular section and a second annular section combined in the annular chamber, wherein the second section is connected to the entrance into the first stage of the compressor and the first section is connected to a drain line, wherein a barrier element deflects a flow from the first section to the second section around the barrier element. By this deflection liquids and foreign particles are separated and can be drained through the drain line.

The compressor respectively the compression stages are preferably of the radial type respectively centrifugal stages. The compressor can be provided with several impellers respectively stages, which are connected by cross over connections.

The barrier element is provided in such a way, that a fluid flow entering the compressor unit through the suction line is directed first into the first section and has to flow around the barrier element to enter the second section before it reaches the first stage of the compressor. The deflection of the flow leads to a separation of amounts of higher density from the lighter amounts of the flow, wherein a significant portion of the heavier amounts, respectively liquids and particles, are retained in the first chamber, which are separated from the portion of the flow entering the second chamber by the barrier element. Preferably driven by the forces of gravity the heavier portions of the flow respectively the liquid and maybe some particles enter the drain line, which is connected to the first section of the chamber, preferably diametrically opposite to the connection of the suction line to the chamber.

Preferably the rotation axis of the compressor unit is vertically arranged. The vertical arrangement enables the use of the force of gravity for the equal distribution of the fluid respectively the liquid in the combined distribution and separation unit respectively the annual chamber. Further it becomes possible to drain the integrated distribution and separation unit respectively the annual chamber by a declination of the drain line just by the forces of gravity. In a vertical arrangement the first section can be designed as a lower part of the chamber and the second section can be designed as an upper part of the chamber respectively with reference to the direction of gravity.

The barrier element is preferably shaped as a ring, which is preferably located on a radially inner wall of the chamber, in particular when the inlet of the fluid to be compressed enters the chamber on the outer diameter of the chamber. This way, when a flow through the suction line enters the chambers in the first section, this flow has to be deflected in first instance by more than 90° to pass the barrier element and in second instance also up to 180° into a radially inward direction to enter the impeller. The extreme bending of the flow to pass the barrier element results in a good separation of liquid from the fluid to be compressed. Preferably the inlet is connected to the chamber in such a manner that a flow through the suction line first enters the first section, is deflected around the barrier element, enters the second section and finally the entrance of the first stage.

A barrier element can with advantage be made as an adjustable insert, which geometry can be changed in such a way that the deflection of the flow from the first section to the second section can be varied from a sharp bending to a less sharp bending. The adjustable barrier element gives the possibility to adjust the compressor unit to different amounts of liquids carried by the fluid to be compressed. If only a smaller amount of liquid is expected, the bending of the flow by the barrier element can be designed less sharp and therefore the pressure loss generated in the chamber is lower and the overall efficiency higher. If a higher amount of liquid is expected, a very sharp bending of the flow can be provided.

Another embodiment of the invention provides a barrier element, which is adjustable by an actuator controlled by control unit. This way the barrier element can be adjusted to the operating conditions and for example a detection device, detecting liquids in the fluid to be compressed, can initiate in a adjustment of a barrier element resulting in a sharper bending of the flow.

The cross-section of the barrier element can be of any suitable geometry, which minimizes pressure loss and maximizes separation.

Another embodiment of the invention provides inlet guide vanes in the transition from the second section to the entrance into the first stage. This way, the fluid distribution is given a defined momentum.

To improve separation and distribution of the fluid entering the compressor unit another embodiment of the invention provides the suction line being connected to the chamber in one area of the circumference of the chamber and the drain line being connected to the chamber diametrically proposed to this area of the circumference.

To improve a saved drain of the chamber another embodiment of the invention is provided, wherein the drain line of the chamber is arranged in such a manner that liquids carried by the fluid flow from the suction line and separated in the chamber, enter the drain line driven by the forces of gravity.

The above mentioned attributes and other features and advantageous of the invention and the manner of attaining them will become more apparent and the invention itself will be better understood by reference to the following description of the currently best note of carrying out the invention taken in conjunction with the accompanying drawings, wherein
- Figure 1: shows a schematic overview in a crossection of a combined separation and distribution unit in the area of the inlet of a compressor unit according to the invention,
- Figure 2: shows a cross section of the most important components according to the invention of figure 1, wherein this depiction corresponds to the section line A-A in figure 2 and
- Figure 3: shows a cross section of the part of the compressor unit, which is depicted in figure 2 according to line B-B.

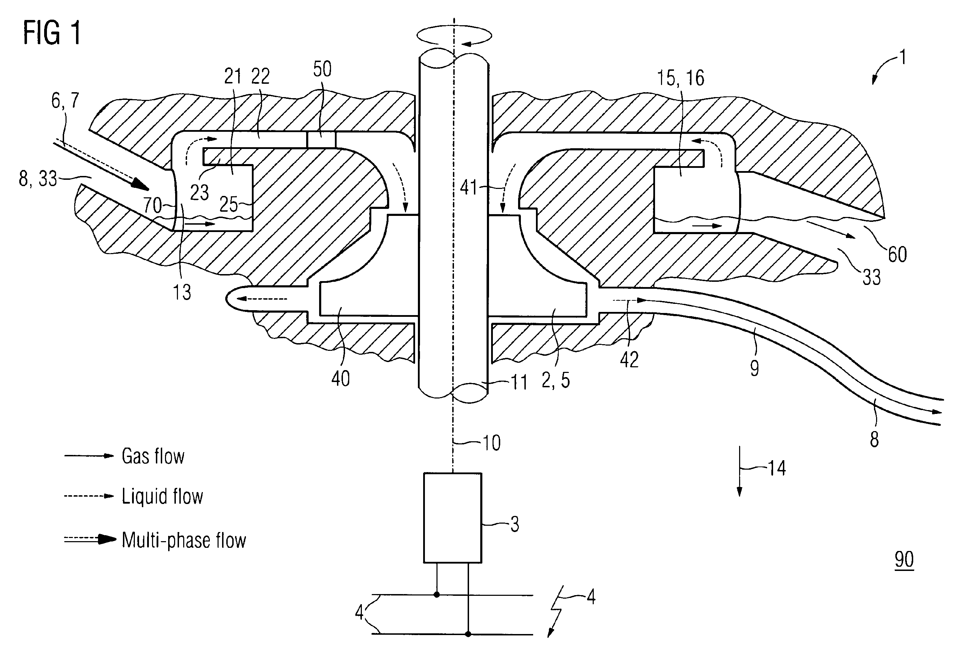

Figure 1 shows a compressor unit 1 in a simplified cross section. The compressor unit 1 comprises a compressor 2 and a drive 3, driven by electrical voltage from a power supply 4. The compressor 2 can comprise several stages but for the purpose of simplicity only a first stage 5 is shown.

A multiphase flow 6 enters the compressor unit 1 through a suction line 7 and after compression of at least the gaseous part, compressed gas 8 exits the compressor unit 1 through a discharge line 9. The first stage 5 of the compressor 2 rotates around the rotation axis 10 of a rotor 11, which supports the stages 5 of the compressor and connects the compressor 2 to the drive 3. The multi phase flow 6 enters an annular chamber 13, which is divided in a first section 21 and a second section 22. Since the rotational axis 10 is oriented vertically (gravity 14) the first section 20 is a lower part of the annular chamber 13 and the second section 22 is an upper part of the annular chamber 13. Both sections 21, 22 are divided by a barrier element 23 from each other, which has also the shape of an annular ring and is connected to a radial inner wall 25 of the annular chamber 13.

The suction line 7 enters the first section 21 in a declining direction and the flow is deflected by more than 90° around the barrier element 23 to enter the second section 22. The sharp deflection of the flow leads to a good separation of liquids 13 from the multiphase flow, so that assuming a normal amount of liquid nearly pure gas 8 enters the second section 22.

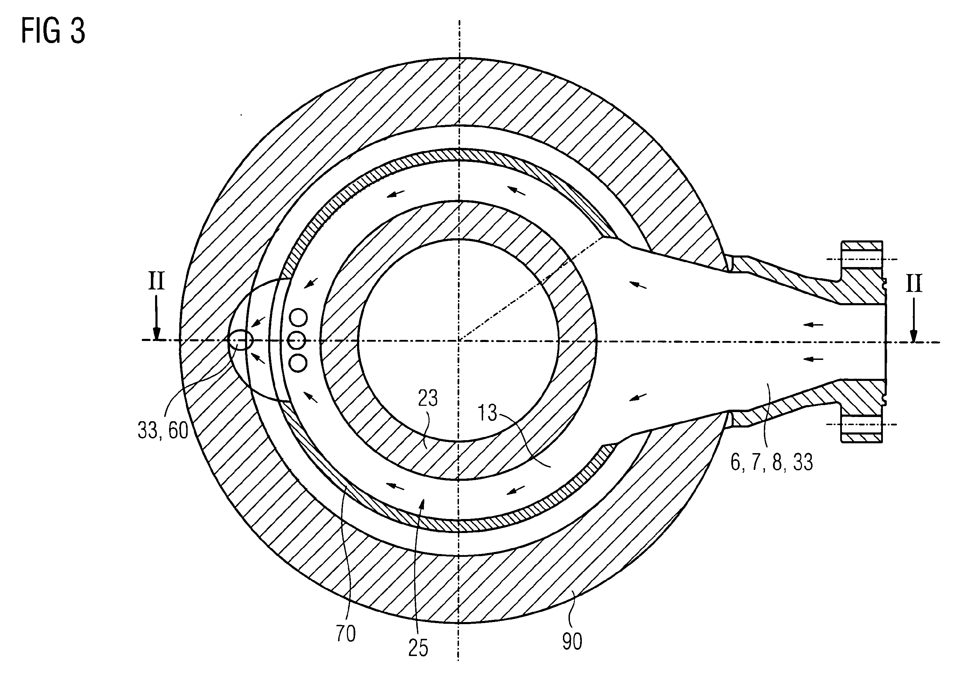

As shown in figure 3 the annular chamber 13 distributes the fluid to be compressed evenly around the circumference so that the gas 8 enters an impeller 40 through an inlet 41 in an axial direction. The gas 8 leaves the impeller 40 through an outlet 42 and enters the discharge line 9.

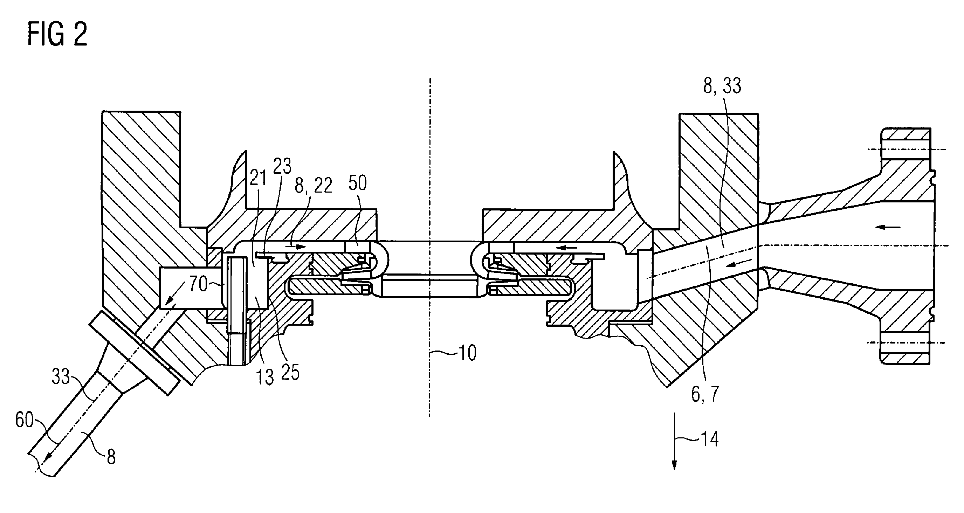

As shown in figure 2 in a transition area between the second section 22 and the inlet 41 guide vanes 50 are provided to give the flow distribution a special momentum.

The separated liquid 33 is discharged from the annular chamber 13 by a drain line 16 impelled by forces of gravity 14.

The annular chamber 13 combines the function of separation of liquids 32 and distribution of the fluid to be compressed over the circumference of the rotation axis 10 in one compact component. If the multiphase flow 6 consists nearly of liquids 33 the annular chamber 30 is still able to distribute the liquid 33 around the circumference so that the inlet 41 of the impeller is evenly loaded with liquid in the case, the drain line 60 can not drain the liquid 33 completely before entering the second section 22. The entrance of the suction line 7 into the annular chamber is located on the radial outer wall 17 to ensure a good separation effect due to the barrier element 23 provided on the radial inner wall 25. Further the suction line 7 enters the annular chamber 13 diametrically proposed to the drain line 60 to ensure an even distribution over the circumference. The flow from the suction line into the first section from the chamber 13 is directed into a cavity formed by the radial inner wall 25 and the barrier element 23 so that the flow is deflected sharply on the way to the second section 22.

The shape of the barrier element 23 is adjusted and optimized for a good separation effect. The barrier element 32 is, as depicted in figure 2, made as an adjustable and exchangeable insert element, which gives a possibility to adjust the separation effect according to the amounts of liquids to be expected in the multiphase flow and other fluid dynamic parameters.

The compressor 2 and the drive 3 are combined in one casing 90, which is gas tight and therefore enables operation under hermetically closed conditions, for instance sub sea operation, operation with toxic gas or operation in an explosive surrounding.

## Claims

1. Compressor unit (1) comprising a compressor (2), with at least one compression stage (5), which comprises at least one impeller (40) of a rotor (11), with an inlet (31) and an outlet (42),
a suction line (7) being connected with the inlet (41),
a discharge line (9) being connected with the outlet (42),
a rotor (11) rotating around a rotation axis (10),
**characterized in**
**that** the inlet (41) comprises
an annular chamber (13), arranged around the rotation axis (10) with at least one opening to an entrance to the impeller (14), in which a separation unit (15) to separate liquid (33) or particles from an entering fluid flow is and
a distribution unit (16) to distribute fluid around the circumference of the rotation axis (10) before entering a first stage (5) of the compressor (2) are provided.

2. Compressor unit (1) according to claim 1,
**characterized in**
**that** the chamber (13) consist of an annular first section (21) and an annular second section (22), wherein the opening is arranged in the second section (22) and the first section (21) is connected to a drain line (60), wherein a barrier element (23) deflects the flow from the first section (21) to the second section (22) around the barrier element (23).

3. Compressor unit (1) according to one of the preceding claims 1, 2,
**characterized in**
**that** the rotation axis (10) is directed vertically.

4. Compressor unit (1) according to preceding claim 3, **characterized in**
the first section (21) is a lower part of the chamber (13) and the second section (23) is an upper part of the chamber (13) referring to the direction of gravity.

5. Compressor unit (1) according to one of the preceding claims 1 to 4,
**characterized in**
**that** the barrier element (23) has the shape of a ring.

6. Compressor unit (1) according to preceding claim 5, **characterized in**
**that** the barrier element (23) is located at a radial inner wall (25) of the chamber (13).

7. Compressor unit (1) according to one of the preceding claims 1 to 5,
**characterized in**
**that** the suction line (7) enters the chamber (13) in such a manner that a flow of a fluid to be compressed flows through the suction line (7),
enters the first section (21),
is deflected around the barrier element (23),
enters the second section (22) and
enters the entrance of the first stage (5).

8. Compressor unit (1) according to one of the preceding claims 1 to 7,
**characterized in**
**that** the barrier element (23) is made as an adjustable insert, which geometry can be changed in such a way that the deflection of the flow from the first section (21) to the second section (22) can be varied by adjusting the barrier element (23) from a sharp bending to a less sharp bending.

9. Compressor unit (1) according to one of the preceding claims 1 to 8,
**characterized in**
**that** in a transition from the second section (22) to the entrance into the first stage (5) an inlet guide vane (50) is provided to give the flow a defined momentum.

10. Compressor unit (1) according to one of the preceding claims 1 to 9, **characterized in**
**that** the suction line (7) is connected to the chamber (13), wherein the fluid to be compressed enters in a first section of the circumference of the chamber (13),
which is diametrically opposed to a second section of the circumference, wherein a connection of the drain line (60) to the chamber (13) is located.

11. Compressor unit (1) according to one of the preceding claims 1 to 10,
**characterized in**
**that** the drain line (60) and the chamber (13) are arranged in such a manner that liquids (33) carried by a fluid flow from the suction line (7) and separated in the chamber (13) enter the drain line (60) driven by the forces of gravity (14).
